# EUROPEAN PATENT APPLICATION

(11) **EP 2 077 413 A2**
(43) Date of publication of application: **08.07.2009**
(21) Application number: 09250012.3
(22) Date of filing: 05.01.2009
(51) Int. Cl.: F16M 13/02, F16M 11/12

(54) **Mount and retaining clip therefor**

(30) Priority: 07.01.2008 GB 0800211
(71) Applicant: AVF Group Limited, Telford, Shropshire TF1 7YE (GB)
(72) Inventor: Worrall, Raymond, Wolverhampton West Midlands WV10 7DN (GB)
(74) Representative: Coles, Pamela Ruth

(57) **Abstract**

A mount (10) for securely mounting an item has at least one first component (12, 14) configured to be secured to an item to be mounted and a second component (16) configured to be secured to a support. The first (12, 14) and second (16) components have complimentary inter-engaging means (20, 52) at a first point of contact (22), and a retaining clip (34) at a second point of contact to fix the relative position of the first component (12, 14) with respect to the second component (16).

## Description

### Field of the Invention

This invention relates to a mount and a retaining clip therefor. Particularly, but not exclusively, the invention relates to a mount for flat panel displays, such as computer monitors and liquid crystal and plasma television sets, and a retaining clip therefor.

### Background to the Invention

With the increase in size and weight of flat panel displays there is an increasing need for a mount that is secure and yet easy to use.

It is therefore an aim of the present invention to provide a mount and a retaining clip therefore, which addresses these issues.

### Summary of the Invention

According to a first aspect of the present invention there is provided a mount comprising a first component configured to be secured to an item to be mounted and a second component configured to be secured to a support, the first and second components having complementary inter-engaging means at a first point of contact, and wherein a retaining clip is provided at a second point of contact to fix the relative position of the first component with respect to the second component.

Thus, the present invention enables an item to be mounted simply by attaching it to a first component, attaching a second component to a desired support, engaging the first component (and thereby the item) on the second component on the support and retaining the two components in a fixed position by means of the retaining clip. The retaining clip serves to prevent the first and second components from becoming unintentionally disengaged and therefore provides additional security.

In a particular embodiment, the item to be mounted is a flat panel display.

The second point of contact is preferably remote from the first point of contact.

The complementary inter-engaging means may comprise at least one hook and at least one lip for engagement with the hook. The hook may be provided on the first component and the lip may be provided on the second component. In one embodiment, the hook is provided at or towards the upper end of the first component, when in use, and the at least one lip is provided at or towards the upper end of the second component, when in use.

The retaining clip may be configured as a latching or locking mechanism.

The retaining clip may be configured to flex to allow the other of the first component or second component to adopt a retained position and whereupon the retaining clip is relaxed to retain the first and second components together. In a particular embodiment, a spring clip constitutes the retaining clip. Alternatively, a leaf spring or resilient plunger may constitute the retaining clip. The leaf spring may be configured to lock the first and second components together when pressure is applied to the retaining clip by one of the first or second components.

In one embodiment, the retaining clip is provided on one of the first or second components and is configured to engage with the other of the first or second components simply when the first component is engaged with the second component and gravity is allowed to bring the first component to its rest position.

The retaining clip may be configured to engage with the other of the first and second components automatically so that manual operation of the retaining clip is not required. By 'automatically' it will be understood that the retaining clip does not require individual priming or adjustment to allow engagement of the components. This is particularly advantageous when heavy items are being mounted.

The retaining clip may be configured to disengage with one of the first component or second component by manual manipulation. In one embodiment, the retaining clip is configured to disengage with the first and/or second components by relative sliding movement. For example, the retaining clip may be configured to slide horizontally to disengage the retaining clip from the first and/or second component. In certain embodiments the retaining clip may be configured to disengage the first component from the second component at the second point of contact (i.e. unlock the mount) but wherein the retaining clip is retained on one of the first or second components. In other embodiments the retaining clip might be configured for complete detachment from the first and second components.

The retaining clip may be formed from nylon and may be moulded. The retaining clip may be formed as a discrete component or may be integral with the one of the first component or second component.

In a particular embodiment, the retaining clip is provided on the first component and is configured to engage with a projection on the second component to retain the two components together.

Multiple retaining clips may be employed for added security.

The position of the retaining clip(s) with respect to one or other of the first and second components may be varied. The retaining clip(s) may be slideable along the length of one or other of the first and second components.

A locating means may be provided to fix the location of the retaining clip on one or other of the first or second components. The locating means may be in the form of a detent or projection provided on the retaining clip or the first or second component.

The points of engagement between the first and second components (e.g. the first and/or second points of contact) may be variable so that a single mount can be advantageously used for the mounting of a variety of differently sized items.

The first component may comprise two or more discrete parts, each comprising one portion of the complementary inter-engaging means. Each part may also be provided with a retaining clip.

The second component may be configured for mounting directly on a wall or other support or may be configured for mounting on an arm or arms, which serve to extend the range of movement permitted by the mount.

The first and/or second components may be made from steel.

Advantageously, the present invention provides a quick-release mount for a flat panel display comprising a pivot for holding a display captive to hang on a support such as to allow engagement of a quick-release clip positioned at a spaced location from the pivot.

The support may be a wall or a stand.

According to a second aspect of the present invention there is provided a retaining clip for a mount comprising an attachment means for attachment to one of a first or second component of a mount and a flexible part configured to flex to allow the other of the first or second component to adopt a retained position with respect to the one of the first or second components to retain the first and second components in a fixed relative position.

Preferably the retaining clip of the second aspect of the invention is configured for use with the mount of the first aspect of the invention, as described above.

According to a third aspect of the present invention there is provided a method of mounting an item comprising attaching the item to a first component of a mount, attaching a second component of the mount to a desired support, inter-engaging the first and second components and retaining the first and second components in a fixed relative position by means of a retaining clip.

The first and second components may be inter-engaged in one position and then moved or pivoted relative to each other to a second position in which they are retained by the retaining clip.

### Brief Description of the Drawings

The invention will now be described, by way of example, with reference to the accompanying drawings, in which:
Figure 1 shows a front perspective view of mount according to a first embodiment of the present invention;
Figures 2A, 2B and 2C show end views of the mount of Figure 1 illustrating respectively the sequential attachment of a first component of the mount to a second component of the mount;
Figure 3 shows a front perspective view of a retaining clip employed in the mount of Figure 1;
Figures 4A and 4B show rear perspective views of a mount according to a second embodiment of the present invention, respectively configured to engage with a wide and a narrow horizontal fixing means of a flat panel display;
Figure 5 shows a front perspective view of mount according to a third embodiment of the present invention;
Figures 6A, 6B and 6C show front perspective views of the mount of Figure 5 attached respectively to a rotatable support, a single extension arm and a double extension arm; and
Figure 7 shows a front perspective view of mount according to a fourth embodiment of the present invention, attached to a quadrilateral arm support.

### Detailed Description of Certain Embodiments

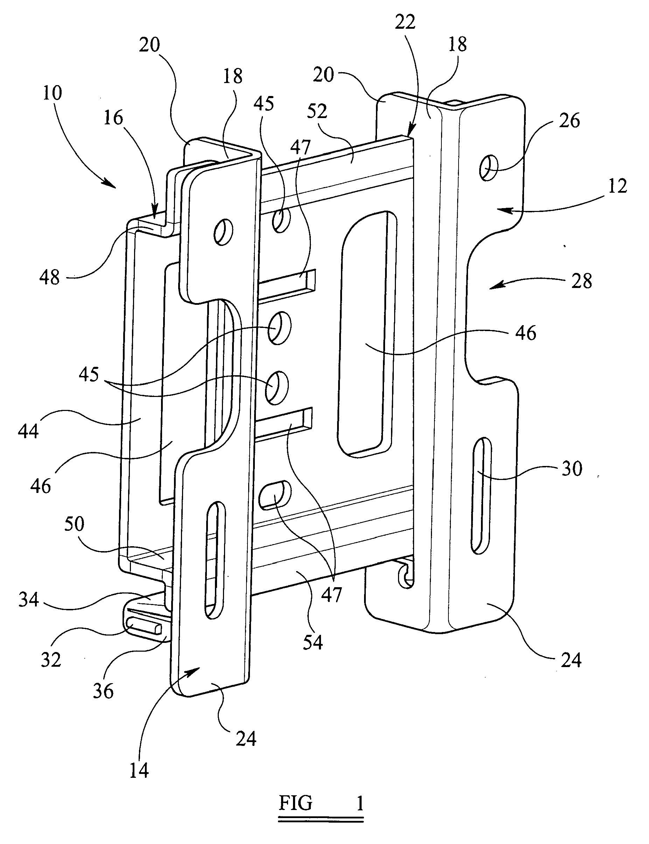

With reference to Figure 1, there is illustrated a mount 10 according to a first embodiment of the present invention. The mount 10 comprises two first components 12, 14 forming a front of the mount 10 and a second component 16 forming a rear of the mount. The two first components 12, 14 are configured for attachment to an item to be mounted which, in this case, is a flat panel display (not shown). The second component 16 is configured for attachment to a support surface such as a wall (not shown). The first components 12, 14 and the second components 16 are formed from respective planar steel plates, which are cut and bent to shape.

The two first components 12, 14 are spaced apart and aligned horizontally. Each of the two first components 12, 14 comprises a longitudinal support panel 18, arranged perpendicularly to the wall. A hook 20 is formed at the upper end of the support panel 18 to form a channel 22 in the support panel 18, which is parallel to the wall. Along the length of the support panel 18, a flange 24 is provided. The flange 24 forms a flat surface which is parallel to the wall and includes a hole 26 in its upper section a longitudinally extending cut-out 28 in its mid-section (designed to reduce the weight of the two first components 12, 14) and a longitudinally extending slot 30 in its lower section. The hole 26 and slot 30 are configured to receive screws therethrough for attachment to the rear of the flat panel display. In this embodiment, each flange 24 is turned outwardly from the centre of the mount 10. However, in alternative embodiments it may be desirable for each flange 24 to be turned inwardly or for one flange 24 to be turned inwardly and one flange 24 to be turned outwardly.

Towards the base of each support panel 18 there is provided a horizontal ledge 32, which is again turned outwardly from the centre of the mount 10. The ledge 32 is configured for attaching a retaining clip 34 to each of the two first components 12, 14.

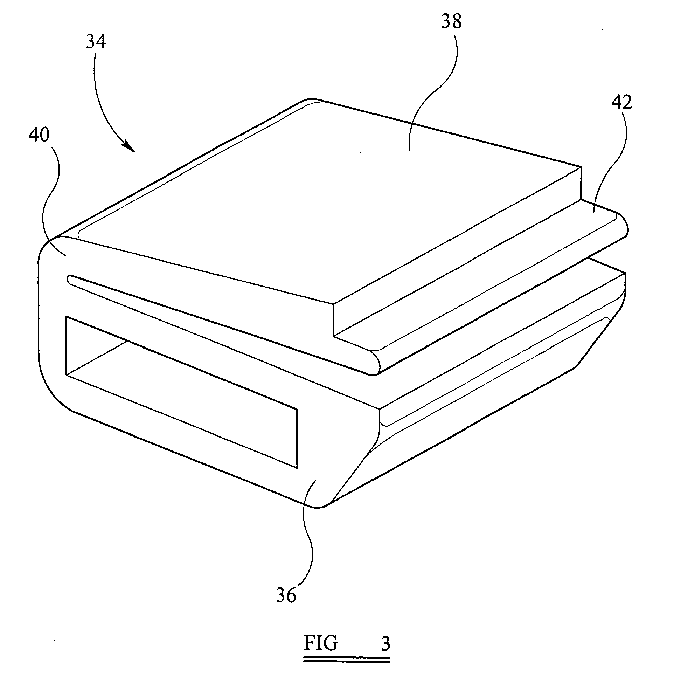

As is more clearly shown in Figure 3, the retaining clip 34 comprises a tubular section 36 configured to be slid over the ledge 32. A flap 38 is attached to the tubular section 36 via an upwardly projecting hinge 40 disposed along the end of the tubular section 36 nearest the wall. The flap 38 extends inwardly and slightly upwardly towards the flange 24. At the end of the flap 38 nearest the flange 24 there is provided a horizontally extending cutout 42 in the upper surface of the flap 38. The retaining clip 34 is formed from moulded nylon and is relatively resilient. In some embodiments (not shown), a locating means may be provided to fix the location of the retaining clip 34 with respect to the two first components 12, 14.

Referring back to Figure 1, the second component 16 comprises a flat mounting section 44 having a series of holes 45, vertical cut-outs 46 (designed to reduce the weight of the second component 16), and horizontal slots 47 therein. In use, the mounting section 44 is placed flat against the wall and attached thereto by inserting screws or the like through the uppermost central hole 45 and the lowermost central horizontal slot 47 - the horizontal slot 47 allowing for some adjustment in the position of the second component 16. The intermediate holes 45 and horizontal slots 47 are for attachment to an alternative first component (not shown). Horizontal sections 48, 50 (projecting away from the wall) extend respectively along the top and bottom edges of the mounting section 44. Extending upwardly from the free end of the top horizontal section 48 is a lip 52. Extending downwardly from the free end of the bottom horizontal section 50 is a skirt 54.

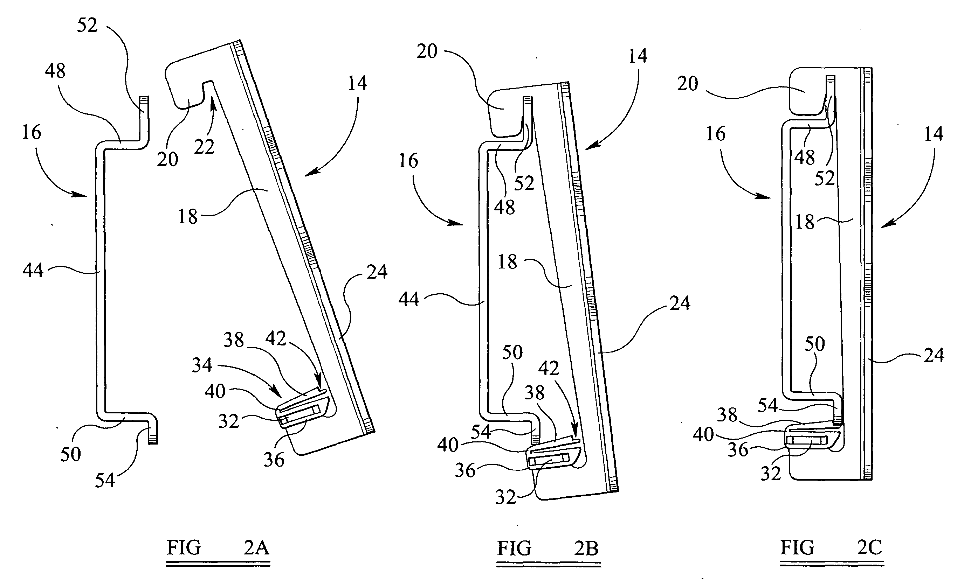

When in use, the two first components 12, 14 are attached to the rear of a flat panel display via their respective flanges 24 and the second component 16 is attached to a support such as a wall via its mounting section 44. With reference to Figures 2A, 2B and 2C, the first components 12, 14 are then brought into engagement with the second component 16 by placing the respective hooks 20 over the lip 52 so that the lip 52 is engaged in the channels 22. Thus, in this embodiment, the hooks 20 and lip 52 constitute complementary inter-engaging means. The lower ends of the two first components 12, 14 are then swung (i.e. pivoted) towards the wall. As shown in Figure 2B, the lower end of the skirt 54 is arranged to contact the flap 38 close to the hinge 40. Subsequent movement of the two first components 12, 14 towards the wall results in the flap 38 flexing downwardly as a result of the pressure exerted by the skirt 54. When the first two components 12, 14 are vertical (i.e. when each support panel 18 is in contact with the front face of the skirt 54) the lower end of the skirt 54 is arranged to be disposed in the cutout 42. This allows the spring bias of the retaining clip 34 to return the flap 38 to its relaxed position to retain the skirt (and therefore the second component) in contact with the first components 12, 14 as shown in Figure 2C.

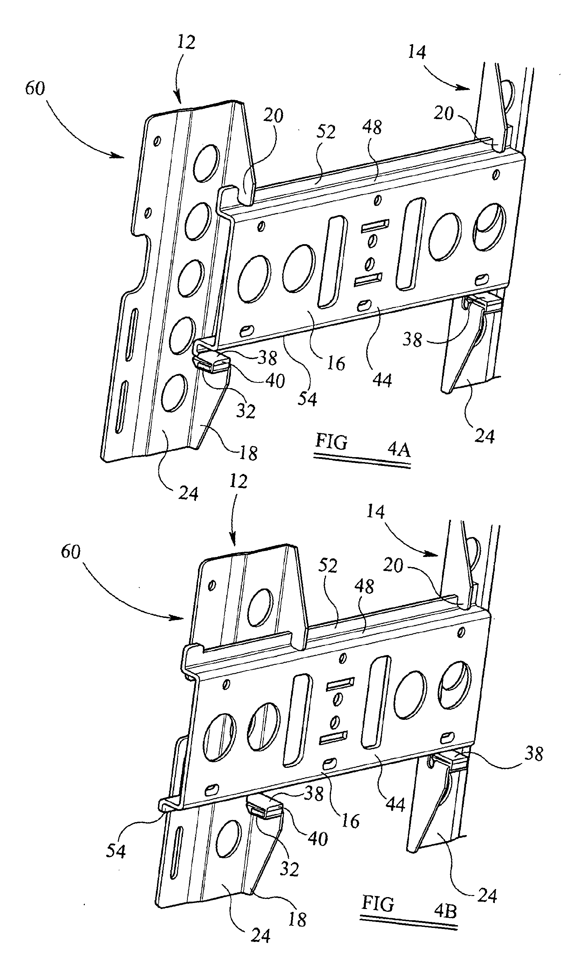

Figures 4A and 4B show rear perspective views of a mount 60 according to a second embodiment of the present invention, respectively configured to engage with a wide and a narrow horizontal fixing means of a flat panel display (not shown). Whilst some of the parts of the mount 60 are of a different size or shape to those shown for the mount 10 in Figure 1, the construction of the mount 60 is essentially the same as that for the mount 10 and so like reference numerals will be used for like parts.

In Figure 4A the mount 60 is configured to engage with a relatively wide fixing means of a flat panel display and so it can be seen that the two first components 12, 14 are attached to the second component 16 at positions near the respective sides of the second component 16. In contrast, in Figure 4B the same mount 60 is employed but this time the two first components 12, 14 are positioned much nearer to the centre of the second component 16 and, accordingly, the mount 60 in this case is configured to engage with a relatively narrow fixing means of a flat panel display. In both cases it can be seen that the first components 12, 14 are engaged with the second component 16 in the same manner as described above (i.e. by placing the respective hooks 20 over the lip 52 so that the lip 52 is engaged in the channels 22 and allowing the lower end of the skirt 54 to pass over the flap 38 of the retaining clip 38 until it is retained in the cut-out 42). Thus, the operation of the mount 60 is identical to that of the mount 10.

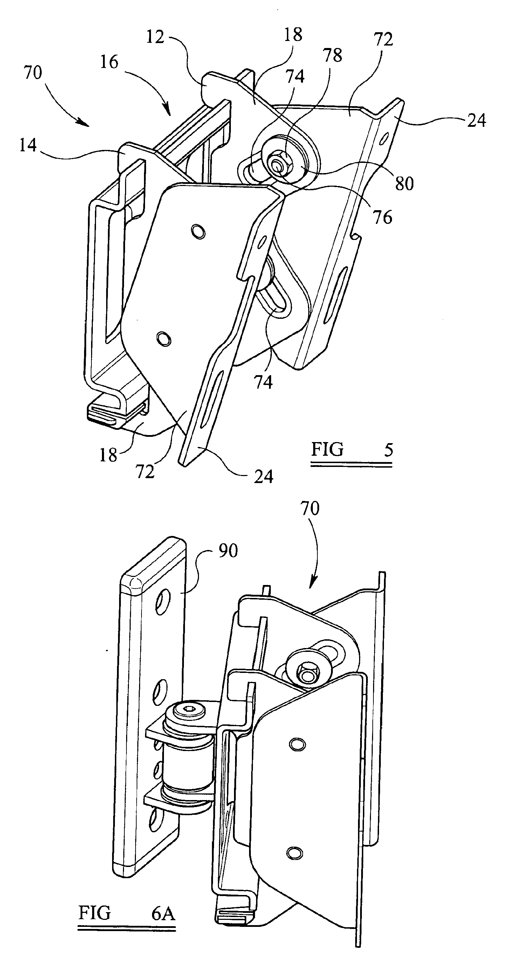

Figure 5 shows a front perspective view of mount 70 according to a third embodiment of the present invention. The construction of the mount 70 is similar to that of the mount 10 of Figure 1 and so like reference numerals will be used for like parts. In fact the only difference between the mount 70 and the mount 10 is that the flanges 24 of the two first components 12, 14 of the mount 70 are not directly attached to the support panels 18 but rather are tiltably attached via extension panels 72. Angled slots 74 are provided in the support panels 18 of mount 70 and screws 76 are provided on the extension panels 72 to engage in the slots 74. Once the desired degree of forward or backward tilt has been selected the screws 76 may be fixed in position in the slots 74 by nuts 78 and washers 80. Some embodiments of the mount 70 may be self-holding wherein it is not necessary to lock the screws 76 in order to maintain the desired degree of tilt. In all other respects, the construction and operation of the mount 70 is identical to that of the mount 10 described above.

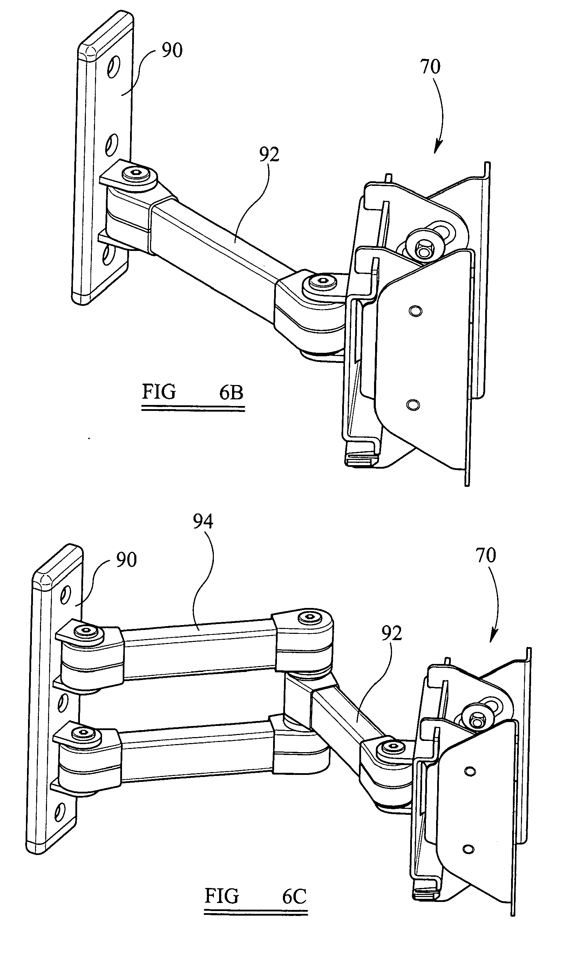

Figures 6A, 6B and 6C show front perspective views of the mount 70 of Figure 5 attached to various different support structures. Although the mount 70 may be mounted directly on a wall or other support surface (in the same manner as described above for the mount 10), it may be desirable to position the mount 70 (or the mounts 10 or 60) on an intermediate support structure. Similarly, the mount 10 of Figure 1 may be mounted on an intermediate support structure such as those shown in Figures 6A, 6B and 6C.

In Figure 6A the mount 70 is pivotally mounted on a back plate 90 such that the mount 70 can be rotated about a vertical axis disposed adjacent the support surface. In Figure 6B the mount 70 is pivotally mounted on the end of an extension arm 92, which itself is pivotally mounted on the back plate 90. In Figure 6C a double set of extension arms 94 are pivotally mounted on the back plate 90 and pivotally connected to the extension arm 92 on which the mount 70 is pivotally mounted. Thus, it is possible to apply embodiments of the present invention to a wide variety of mounts.

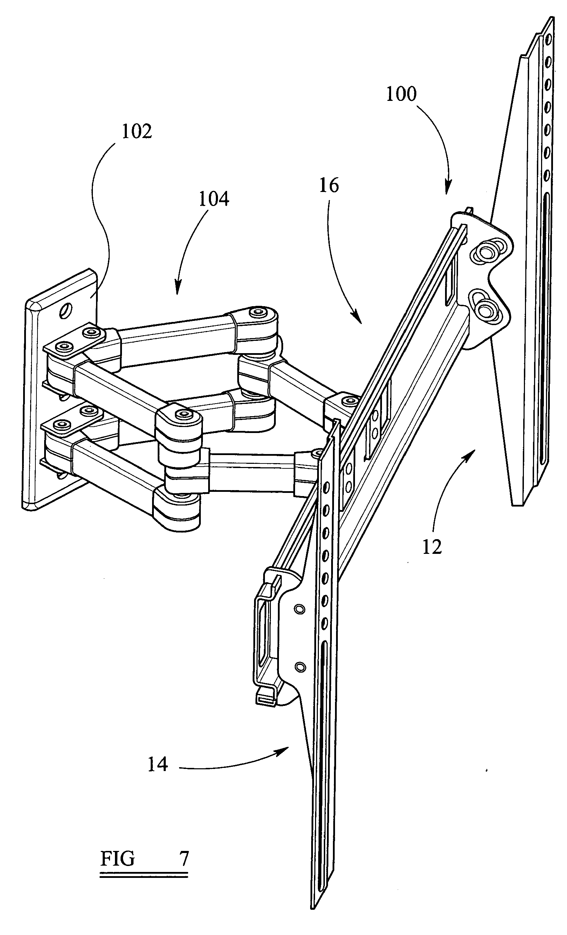

Figure 7 shows a front perspective view of mount 100 according to a fourth embodiment of the present invention. The mount 100 is similar to the mount 70 of Figure 5 but with a wider second component 16 and longer first components 12, 14 so as to allow for fixing to a wider set of fixing means on a flat panel display (not shown). The construction and operation of the mount 100 is identical to that described above in relation to mount 70. However, the mount 100 may alternatively comprise the construction of mount 10 (i.e. it need not include the tilt mechanism as shown). Although the mount 100 may be attached directly to a wall or other support surface it may also be attached to a variety of different support structures such as those described above. As shown in Figure 7, the mount 100 is attached to a further support structure comprising a back plate 102 and a quadrilateral arm structure 104. The quadrilateral arm structure 104 comprises four pivotable joints - two opposite joints being pivotally attached, respectively, to the back plate 102 and mount 100. Thus, the mount 100 in this embodiment may be placed in a variety of positions with respect to the back plate 102. The mounts 10 and 70 described above may also be attached to the support structure shown in Figure 7.

Whilst all of the above described embodiments comprise inter-engaging means in the form of a hook 20 and a lip 52 provided at or towards the upper ends of the first and second components 12, 14, 16 respectively, and a retaining clip provided at or towards the lower ends, the present invention is not limited to such an arrangement and embodiments may be devised with other types of inter-engaging means as well as having inter-engaging means and retaining clips provided at other positions.

It will be appreciated by persons skilled in the art that various modifications may be made to the above-described embodiments without departing from the scope of the present invention. For example, whilst the above discussion has been concerned with mounts suitable for mounting flat panel displays, the invention is equally applicable to mounts for other items.

## Claims

1. A mount comprising a first component configured to be secured to an item to be mounted and a second component configured to be secured to a support, the first and second components having complimentary inter-engaging means at a first point of contact, and wherein a retaining clip is provided at a second point of contact to fix the relative position of the first component with respect to the second component.

2. A mount according to claim 1, wherein the retaining clip comprises a leaf spring configured to lock the first and second components together when pressure is applied to the retaining clip by one of the first or second components.

3. A mount according to any preceding claim, wherein the retaining clip is provided on one of the first or second components and is configured to engage with the other of the first or second components when the first component is engaged with the second component and gravity is allowed to bring the first component to its rest position.

4. A mount according to any preceding claim, wherein the retaining clip is configured to disengage with the first component and/or the second component by relative sliding movement.

5. A mount according to any preceding claim, wherein the retaining clip is provided on the first component and is configured to engage with a projection on the second component to retain the two components together.

6. A mount according to any preceding claim, wherein multiple retaining clips are employed.

7. A mount according to any preceding claim, wherein the position of the retaining clip(s) with respect to one or other of the first and second components can be varied.

8. A mount according to claim 7, wherein the retaining clip(s) are slideable along the length of one or other of the first and second components.

9. A mount according to any preceding claim, wherein the location of the retaining clip is fixed by a locating means in the form of a detent or a projection provided on the retaining clip or the first or second component.

10. A mount according to any preceding claim, wherein the first and/or second points of contact between the first and second components are variable so that a single mount can be used for the mounting of a variety of differently sized items.

11. A mount according to any preceding claim, wherein the first component comprises of two or more discrete parts, each comprising one portion of the complementary inter-engaging means.

12. A mount according to claim 11, wherein each of the two or more discrete parts is provided with a retaining clip.

13. A mount according to any preceding claim, wherein the second component is configured for mounting on an arm or arms, which serve to extend the range of movement permitted by the mount.

14. A mount according to any preceding claim, wherein the item to be mounted is a flat panel display.

15. A mount comprising a first component configured to be secured to an item to be mounted and a second component configured to be secured to a support, the first and second components having complimentary inter-engaging means at a first point of contact which allows the first component to pivot relative to the second component such that gravity can serve to bring the first and second components together at a second point of contact whereupon a retaining clip is provided to lock the first and second components together.
